(19) Europäisches Patentamt / European Patent Office / Office européen des brevets

(11) **EP 4 296 387 A1**

(12) **EUROPEAN PATENT APPLICATION**
published in accordance with Art. 153(4) EPC

(43) Date of publication:
27.12.2023 Bulletin 2023/52

(21) Application number: 22832572.6

(22) Date of filing: 14.04.2022

(51) International Patent Classification (IPC):
*C21D 9/46* (2006.01)    *C22C 38/00* (2006.01)
*C22C 38/48* (2006.01)    *C22C 38/60* (2006.01)

(52) Cooperative Patent Classification (CPC):
**C21D 9/46; C22C 38/00; C22C 38/48; C22C 38/60;**
Y02T 10/12

(86) International application number:
**PCT/JP2022/017825**

(87) International publication number:
**WO 2023/276411 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.06.2021 JP 2021106291

(71) Applicant: JFE Steel Corporation
Tokyo 100-0011 (JP)

(72) Inventor: OIKAWA, Shinji
Tokyo 100-0011 (JP)

(74) Representative: Haseltine Lake Kempner LLP
Bürkleinstrasse 10
80538 München (DE)

(54) **FERRITIC STAINLESS STEEL**

(57)    There is provided a ferritic stainless steel which has good brazeability when subjected to brazing at a high temperature using a Ni-containing brazing material and, in addition, has excellent corrosion resistance after brazing.

The ferritic stainless steel has a composition containing, in % by mass, C: 0.003 to 0.030%, Si: 0.01 to 1.00%, Mn: 0.05 to 0.30%, P: 0.050% or less, S: 0.020% or less, Cr: 24.0 to 30.0%, Ni: 1.50 to 3.00%, Mo: 1.00 to 3.00%, Al: 0.001 to 0.020%, Nb: 0.20 to 0.80%, and N: 0.030% or less, the balance being Fe and incidental impurities. The composition satisfies the following inequalities (1) and (2):

$$Ni - 2(Si + Mn) \geq 0.00\% \qquad (1)$$

$$Cr + 1.5Mo + Si + 1.5Nb - 2.5Ni \leq 25.0\% \qquad (2)$$

(where Ni, Si, Mn, Cr, Mo, and Nb each represent the content (% by mass) of the element).

EP 4 296 387 A1

**Description**

Technical Field

The present invention relates to a ferritic stainless steel, and more particularly to a ferritic stainless steel which has good brazeability when subjected to brazing at a high temperature using a Ni-containing brazing material and, in addition, has excellent corrosion resistance.

Background Art

From the standpoint of global environment protection, there has recently been a demand for further improvement in fuel efficiency and enhancement of exhaust gas purification in automobiles. Therefore, the application of automotive heat exchangers, such as an exhaust heat recovery device and an exhaust gas recirculation (EGR) cooler, is expanding.

The exhaust heat recovery device is a device which uses the heat of engine cooling water to heat the room air, or warms engine cooling water with the heat of exhaust gas to reduce the warm-up time upon start of an engine, thereby enhancing the fuel efficiency. The exhaust heat recovery device is generally installed between a catalytic converter and a muffler. The exhaust heat recovery device is composed of a heat exchanger portion including a combination of a pipe(s), a plate(s), a fin(s), a side plate(s), etc., an inlet pipe portion, and an outlet pipe portion. An exhaust gas flows through the inlet pipe and enters the heat exchanger portion, where it transfers its heat to cooling water via heat transfer surfaces of, for example, fins, and is discharged through the outlet pipe. Brazing with a Ni-containing brazing material is mainly used for bonding and assembly of plates and fins that constitute the heat exchanger portion of such an exhaust heat recovery device.

The EGR cooler is composed of a pipe for taking part of exhaust gas from an exhaust manifold or the like, a heat exchanger for cooling the exhaust gas taken in, and a pipe for returning the cooled exhaust gas to the intake side of an engine. In a specific construction of the EGR cooler, a heat exchanger having both a water flow passage and an exhaust gas passage is disposed on a path for recirculating exhaust gas from an exhaust manifold to the intake side of an engine. With such a construction, a high-temperature exhaust gas on the exhaust side is cooled by the heat exchanger, and the cooled exhaust gas is returned to the intake side of the engine to reduce the combustion temperature of the engine, thereby reducing the amount of $NO_x$ which is likely to be generated at high temperatures. The heat exchanger portion of such an EGR cooler is composed of a stack of thin fin-shaped plates for reasons of weight reduction, size reduction, cost reduction, etc. Brazing with a Ni-containing brazing material is mainly used also for bonding and assembly of such plates.

As described above, parts of the heat exchanger portion of an exhaust heat recovery device or an EGR cooler are bonded and assembled by brazing using a Ni-containing brazing material. Materials for use in such a heat exchanger portion are therefore required to have good brazeability for Ni-containing brazing materials. An exhaust gas contains a nitrogen oxide ($NO_x$), a sulfur oxide ($SO_x$), and a hydrocarbon (HC). These compounds condense in a heat exchanger to form highly-corrosive acidic condensed water. Therefore, materials for use in such a heat exchanger portion are also required to have corrosion resistance. In particular, during a brazing heat treatment, a so-called sensitization phenomenon may occur in which Cr at grain boundaries reacts with C and N at a high temperature to form a Cr carbonitride, and a Cr-depleted layer having poor corrosion resistance is formed around the Cr carbonitride. It is necessary to prevent the occurrence of such a phenomenon and ensure corrosion resistance.

For the above reasons, an austenitic stainless steel such as SUS316L or SUS304L, which has a reduced carbon content to prevent sensitization, is usually used for the heat exchanger portion of an exhaust heat recovery device or an EGR cooler. However, an austenitic stainless steel is expensive because it contains a large amount of Ni. In addition, an austenitic stainless steel exhibits a considerable thermal expansion; therefore, its fatigue properties are poor in a usage environment where it is forced to be subjected to strong vibration under constraint at a high temperature, i.e., its high-temperature thermal fatigue properties are poor.

In view of this, the use of a steel other than an austenitic stainless steel for the heat exchanger portion of an exhaust heat recovery device or an EGR cooler is being studied.

For example, Patent Literature 1 discloses a ferritic stainless steel which ensures corrosion resistance through the formation of an oxide film, containing Nb in an amount of 16.0% or more in terms of cation fraction, after brazing as a material for an exhaust heat recovery device or an EGR cooler.

Patent Literature 2 discloses a ferritic stainless steel, which ensures corrosion resistance by controlling the amounts of Al, Ti and Si added, as a material for an exhaust heat recovery device or an EGR cooler.

Patent Literature 3 discloses a ferritic stainless steel, which ensures corrosion resistance by controlling the contents of Cr, Si and Al in an oxide film after brazing and controlling the thickness of the oxide film, as a material for a heat exchanger or a fuel supply system member.

Patent Literature 4 discloses, as a material for an EGR cooler, a ferritic stainless steel which ensures brazeability by adding components such as Cr, Cu, Al, and Ti in accordance with a certain relational expression and controlling the amounts of Al and Ti added.

Patent Literature 5 discloses a ferritic stainless steel, which ensures brazeability by controlling the amounts of Al, Ti and Zr added, as a material for parts of an EGR cooler having a structure in which the parts are bonded by Ni brazing.

Further, Patent Literature 6 discloses, as a ferritic stainless steel material for brazing, a ferritic stainless steel which secures brazeability by controlling the amounts of Ti and Zr added.

Citation List

Patent Literature

PTL 1: Japanese Patent No. 6157664
PTL 2: Japanese Patent No. 6159775
PTL 3: Japanese Patent No. 6270821
PTL 4: Japanese Unexamined Patent Application Publication No. 2010-121208
PTL 5: Japanese Unexamined Patent Application Publication No. 2009-174040
PTL 6: Japanese Unexamined Patent Application Publication No. 2010-285683

Summary of Invention

Technical Problem

However, the techniques described in Patent Literatures 1 to 6 sometimes achieve insufficient brazeability depending on the brazing material used, the brazing conditions, etc. In particular, it cannot be said that the related art techniques sufficiently ensure high-temperature brazeability using a Ni-containing brazing material while achieving good corrosion resistance as described above.

The present invention was developed in view of the situation described above. It is therefore an object of the present invention to provide a ferritic stainless steel which has good brazeability when subjected to brazing at a high temperature using a Ni-containing brazing material and, in addition, has excellent corrosion resistance after brazing.

As used herein, good brazeability refers to the fact that after performing a brazing treatment by heating a steel sheet with a Ni-containing brazing material (JIS standard: BNi-5), for 10 minutes in a nitrogen carrier gas atmosphere at 1170°C and 1 Torr, and then cooling the steel sheet to room temperature, the ratio (brazing material spreading ratio) of the equivalent circle diameter of the brazing material after heating to the equivalent circle diameter of the brazing material before heating is 150% or more.

Excellent corrosion resistance herein refers to the following fact. Using the above steel sheet after the brazing treatment with the Ni-containing brazing material, a 20-mm square test specimen is taken from a portion of the steel sheet to which the brazing material is not attached. The test specimen is coated with a sealing material, leaving a 11-mm square measuring area. The test specimen is then immersed in a 3.5% aqueous NaCl solution at 30°C, and a pitting corrosion potential Vc'100 is measured in accordance with JIS G 0577 except for the concentration of the aqueous NaCl solution. The measured pitting corrosion potential Vc'100 is 300 mV (vs SCE) or more.

Solution to Problem

The present inventors have made intensive studies on the relationship between component elements of various stainless steels and brazeability in high-temperature brazing using a Ni-containing brazing material.

As a result, it has been found that the wettability of a stainless steel for a Ni-containing brazing material is enhanced by controlling the Al content in the stainless steel, adding an appropriate amount of Ni to the stainless steel, and appropriately controlling the total content of Si and Mn relative to the content of Ni.

Further, through intensive studies on the relationship between component elements of various stainless steels and corrosion resistance after brazing, it has been found that the σ phase (sigma phase) precipitates upon a high-temperature brazing heat treatment of a stainless steel, resulting in a reduction in the corrosion resistance of the stainless steel. The σ phase is an intermetallic compound containing a large amount of Cr and Mo. A Cr/Mo-depleted layer is formed around the σ phase, resulting in a reduction in the corrosion resistance after brazing. Upon further studies, it has been found that by adding an appropriate amount of Ni to a stainless steel and appropriately controlling the contents of Cr, Mo, Si and Nb relative to the content of Ni, precipitation of the σ phase during a high-temperature brazing heat treatment can be inhibited.

The present invention was completed based on the above findings and on additional studies. Thus, the present invention is summarized as follows.

[1] A ferritic stainless steel having a composition containing, in % by mass:

C: 0.003 to 0.030%;
Si: 0.01 to 1.00%;
Mn: 0.05 to 0.30%;
P: 0.050% or less;
S: 0.020% or less;
Cr: 24.0 to 30.0%;
Ni: 1.50 to 3.00%;
Mo: 1.00 to 3.00%;
Al: 0.001 to 0.020%;
Nb: 0.20 to 0.80%; and
N: 0.030% or less,

the balance being Fe and incidental impurities, the composition satisfying the following inequalities (1) and (2) :

$$Ni - 2(Si + Mn) \geq 0.00\% \qquad (1)$$

$$Cr + 1.5Mo + Si + 1.5Nb - 2.5Ni \leq 25.0\% \qquad (2)$$

 (where Ni, Si, Mn, Cr, Mo, and Nb each represent the content (% by mass) of the element).
[2] The ferritic stainless steel as described in [1] above, further containing, in % by mass, one or two or more selected from:

Cu: 0.01 to 1.00%;
Co: 0.01 to 1.00%; and
W: 0.01 to 2.00%.

[3] The ferritic stainless steel as described in [1] or [2] above, further containing, in % by mass, one or two or more selected from:

Ti: 0.01 to 0.10%;
V: 0.01 to 0.20%;
Zr: 0.01 to 0.10%;
Mg: 0.0005 to 0.0050%;
Ca: 0.0005 to 0.0050%;
B: 0.0005 to 0.0050%;
REM (rare earth metal): 0.001 to 0.100%;
Sn: 0.001 to 0.100%; and
Sb: 0.001 to 0.100%.

[4] The ferritic stainless steel as described in [1] or [2] above, which is for an exhaust heat recovery device or an exhaust gas recirculation device in which at least one joint is assembled by brazing.
[5] The ferritic stainless steel as described in [3] above, which is for an exhaust heat recovery device or an exhaust gas recirculation device in which at least one joint is assembled by brazing.

Advantageous Effects of Invention

According to the present invention, it is possible to obtain a ferritic stainless steel which has good brazeability when subjected to brazing at a high temperature using a Ni-containing brazing material and, in addition, has excellent corrosion resistance after brazing.

Description of Embodiments

The present invention will now be described in detail.

Reasons for the limitation of each steel component to the above-described range in the chemical composition of the present invention will be described first. While the unit of the content of each element in the chemical composition of the steel is "% by mass", it will hereinafter be expressed simply as "%" unless otherwise specified.

C: 0.003 to 0.030%

The higher the C content, the higher the strength; the lower the C content, the better the formability. C needs to be contained in an amount of 0.003% or more in order to obtain sufficient strength. However, when the C content exceeds 0.030%, the formability is significantly reduced. In addition, a Cr carbide precipitates at grain boundaries to cause sensitization, resulting in a reduction in the corrosion resistance. Therefore, the C content is made to fall within the range of 0.003 to 0.030%. The C content is preferably 0.004% or more. On the other hand, the C content is preferably 0.025% or less, more preferably 0.020% or less, and even more preferably 0.010% or less.

Si: 0.01 to 1.00%

Si is an element useful as a deoxidizer. The effect is achieved when the Si content is 0.01% or more. However, when the Si content exceeds 1.00%, a Si-rich compound such as Si oxide or Si nitride is formed on the surface of a steel sheet during a brazing heat treatment, leading to a deterioration of brazeability. Further, the $\sigma$ phase precipitates during a high-temperature brazing treatment using a Ni-containing brazing material, resulting in a reduction in the corrosion resistance. Therefore, the Si content is made to fall within the range of 0.01 to 1.00%. The Si content is preferably 0.50% or more, more preferably 0.60% or more, and even more preferably 0.70% or more. On the other hand, the Si content is preferably 0.85% or less, more preferably 0.80% or less.

Mn: 0.05 to 0.30%

Mn has a deoxidizing effect, and the effect is achieved when the content of Mn is 0.05% or more. However, when the Mn content exceeds 0.30%, a Mn-rich compound is formed on the surface of a steel sheet during a brazing heat treatment, leading to a deterioration of the brazeability. Therefore, the Mn content is made to fall within the range of 0.05 to 0.30%. The Mn content is preferably 0.10% or more. On the other hand, the Mn content is preferably 0.25% or less, more preferably 0.20% or less, and even more preferably 0.15% or less.

P: 0.050% or less

P is an element which is inevitably contained in steel. An excessive content of P is likely to cause intergranular corrosion. This tendency is remarkable when the P content exceeds 0.050%. Therefore, the P content is made 0.050% or less. The P content is preferably 0.040% or less, more preferably 0.030% or less. The lower limit of the P content is not particularly limited; however, the P content is preferably 0.005% or more because excessive dephosphorization entails an increase in cost.

S: 0.020% or less

S is an element which is inevitably contained in steel. The inclusion of S in an amount exceeding 0.020% promotes the precipitation of MnS and reduces the corrosion resistance. Therefore, the S content is made 0.020% or less. The S content is preferably 0.010% or less. The lower limit of the S content is not particularly limited; however, the S content is preferably 0.0005% or more because excessive desulfurization entails an increase in cost.

Cr: 24.0 to 30.0%

Cr is an important element for ensuring the corrosion resistance of the stainless steel. When the Cr content is less than 24.0%, sufficient corrosion resistance cannot be achieved. On the other hand, when the Cr content exceeds 30.0%, the $\sigma$ phase precipitates during brazing, resulting in a reduction in the corrosion resistance. Therefore, the Cr content is made to fall within the range of 24.0 to 30.0%. The Cr content is preferably 24.5% or more, more preferably 25.0% or more. On the other hand, the Cr content is preferably 28.0% or less, more preferably 26.5% or less.

Ni: 1.50 to 3.00%

Ni is one of the important elements in the present invention. The inclusion of Ni in an amount of 1.50% or more enhances the brazeability for a Ni-containing brazing material. While the mechanism by which the inclusion of Ni enhances Ni brazeability is not fully elucidated, it is conceivable that when an appropriate amount of Ni is contained in the base material, an interaction with Ni contained in a brazing material enhances the wettability. In addition, precipitation of the σ phase during brazing can be inhibited. However, when the Ni content exceeds 3.00%, the susceptibility to stress corrosion cracking is high. Therefore, the Ni content is made to fall within the range of 1.50 to 3.00%. The Ni content is preferably 1.75% or more, more preferably 2.00% or more. On the other hand, the Ni content is preferably 2.75% or less, more preferably 2.50% or less.

Mo: 1.00 to 3.00%

Mo stabilizes a passivation film of the stainless steel and enhances the corrosion resistance. The effect is achieved when the Mo content is 1.00% or more. However, when the Mo content exceeds 3.00%, the σ phase precipitates during brazing, resulting in a reduction in the corrosion resistance. Therefore, the Mo content is made to fall within the range of 1.00 to 3.00%. The Mo content is preferably 1.25% or more, more preferably 1.50% or more. On the other hand, the Mo content is preferably 2.50% or less, more preferably 2.00% or less.

Al: 0.001 to 0.020%

Al is an element useful for deoxidation, and the effect is achieved when the Al content is 0.001% or more. However, when the Al content exceeds 0.020%, an Al-rich compound such as Al oxide or Al nitride is formed on the surface of the steel during a brazing treatment. This causes a reduction in the wetting/spreading of a brazing material and a reduction in the adhesion between the stainless steel and the brazing material, making brazing with the brazing material difficult. Therefore, the Al content is made to fall within the range of 0.001 to 0.020%. The Al content is preferably 0.015% or less.

Nb: 0.20 to 0.80%

Nb is an element which, through binding to C and N, reduces the reduction in the corrosion resistance (sensitization) due to the precipitation of Cr carbonitride. The effect is achieved when the Nb content is 0.20% or more. On the other hand, when the Nb content exceeds 0.80%, the σ phase precipitates during brazing, resulting in a reduction in the corrosion resistance. Therefore, the Nb content is made to fall within the range of 0.20 to 0.80%. The Nb content is preferably 0.25% or more, more preferably 0.30% or more. On the other hand, the Nb content is preferably 0.60% or less, more preferably 0.35% or less.

N: 0.030% or less

When the N content exceeds 0.030%, the corrosion resistance and the formability will decrease. Therefore, the N content is made 0.030% or less. The N content is preferably 0.025% or less, more preferably 0.020% or less. The lower limit of the N content is not particularly limited; however, the N content is preferably 0.003% or more because an excessive reduction in the N content entails an increase in cost.

$$Ni - 2(Si + Mn) \geq 0.00\% \qquad (1)$$

In the inequality (1), Ni, Si, and Mn each represent the content (% by mass) of the element.

In the present invention, the content of each of Ni, Si, and Mn is controlled in the predetermined range in order to enhance the brazeability. The present inventors, through their intensive studies, have also found that when Ni - 2(Si + Mn) (Ni content minus twice the sum of Si content and Mn content) is less than 0.00%, a desired brazeability cannot be achieved. It is conceivable in this regard that Ni improves brazeability, whereas Si and Mn each deteriorate brazeability; thus, a balance of these elements has a significant influence on brazeability. In the present invention, each of the Ni content, the Si content, and the Mn content is controlled in the above-described range and, in addition, Ni - 2(Si + Mn) is made 0.00% or more. Ni - 2(Si + Mn) is preferably 0.500 or more. In particular, better brazeability can be achieved by making the Cr content less than 26.0% and the Al content 0.015% or less, and making Ni - 2(Si + Mn) 0.50% or more.

$$Cr + 1.5Mo + Si + 1.5Nb - 2.5Ni \leq 25.0\% \qquad (2)$$

In the inequality (2), Cr, Mo, Si, Nb, and Ni each represent the content (% by mass) of the element.

In the present invention, the content of each of Cr, Mo, Si, Nb, and Ni is controlled in the predetermined range in order to inhibit precipitation of the σ phase during brazing. The present inventors, through their intensive studies, have also found that when Cr + 1.5Mo + Si + 1.5Nb - 2.5Ni is more than 25.0%, the σ phase precipitates during brazing, resulting in a reduction in the corrosion resistance. It is conceivable in this regard that Ni inhibits precipitation of the σ phase, whereas Cr, Mo, Si, and Nb each promote precipitation of the σ phase; thus, a balance of these elements has a significant influence on the precipitation of the σ phase. In the present invention, each of the Cr content, the Mo content, the Si content, the Nb content, and the Ni content is controlled in the above-described range and, in addition, Cr + 1.5Mo + Si + 1.5Nb - 2.5Ni is made 25.0% or less.

The basic components (essential components) of the ferritic stainless steel of the present invention have been described above. In the chemical composition according to the present invention, the components (balance) other than the above-described components are Fe and incidental impurities.

The ferritic stainless steel of the present invention may further contain one or two or more selected from Cu, Co, and W in an amount within the below-described range.

Cu: 0.01 to 1.00%

Cu is an element which enhances the corrosion resistance. The effect is achieved when the Cu content is 0.01% or more. However, when the Cu content exceeds 1.00%, the hot formability deteriorates. Therefore, when the stainless steel contains Cu, the Cu content is made to fall within the range of 0.01 to 1.00%. When Cu is contained, the Cu content is more preferably 0.10% or more. On the other hand, when Cu is contained, the Cu content is more preferably 0.80% or less, even more preferably 0.60% or less.

Co: 0.01 to 1.00%

Co is an element which enhances the corrosion resistance. The effect is achieved when the Co content is 0.01% or more. However, when the Co content exceeds 1.00%, the formability deteriorates. Therefore, when the stainless steel contains Co, the Co content is made to fall within the range of 0.01 to 1.00%. When Co is contained, the Co content is more preferably 0.05% or more. On the other hand, when Co is contained, the Co content is more preferably 0.70% or less.

W: 0.01 to 2.00%

W is an element which enhances the corrosion resistance. The effect is achieved when the W content is 0.01% or more. However, when the W content exceeds 2.00%, the σ phase precipitates during brazing. Therefore, when the stainless steel contains W, the W content is made to fall within the range of 0.01 to 2.00%. When W is contained, the W content is more preferably 0.05% or more. On the other hand, when W is contained, the W content is more preferably 1.00% or less.

The ferritic stainless steel of the present invention may further contain one or two or more selected from Ti, V, Zr, Mg, Ca, B, REM, Sn, and Sb in an amount within the below-described range.

Ti: 0.01 to 0.10%

Ti binds to C and N contained in the steel, producing the effect of preventing sensitization. The effect is achieved when the Ti content is 0.01% or more. On the other hand, Ti is an element with activity against oxygen. When Ti is contained in the steel in an amount exceeding 0.10%, a Ti oxide film will be formed on the surface of the steel during a brazing treatment, leading to a deterioration of the brazeability. Therefore, when the stainless steel contains Ti, the Ti content is made to fall within the range of 0.01 to 0.10%. When Ti is contained, the Ti content is more preferably 0.05% or less.

V: 0.01 to 0.20%

As with Ti, V binds to C and N contained in the steel, thereby preventing sensitization. The effect is achieved when the V content is 0.01% or more. On the other hand, the inclusion of V in an amount exceeding 0.20% deteriorates the formability. Therefore, when the stainless steel contains V, the V content is made to fall within the range of 0.01 to 0.20%. When V is contained, the V content is more preferably 0.15% or less, even more preferably 0.10% or less.

Zr: 0.01 to 0.10%

As with Ti and Nb, Zr is an element which binds to C and N contained in the steel, thereby inhibiting sensitization. The effect is achieved when the Zr content is 0.01% or more. On the other hand, the inclusion of Zr in an amount exceeding 0.10% deteriorates the formability. Therefore, when the stainless steel contains Zr, the Zr content is made to fall within the range of 0.01 to 0.10%. When Zr is contained, the Zr content is more preferably 0.03% or more. On the other hand, when Zr is contained, the Zr content is more preferably 0.05% or less.

Mg: 0.0005 to 0.0050%

Mg acts as a deoxidizer. The effect is achieved when the Mg content is 0.0005% or more. However, when the Mg content exceeds 0.0050%, the toughness of the steel will decrease, leading to a reduction in the productivity. Therefore, when the stainless steel contains Mg, the Mg content is made to fall within the range of 0.0005 to 0.0050%. When Mg is contained, the Mg content is more preferably 0.0020% or less.

Ca: 0.0005 to 0.0050%

Ca improves penetration of a weld, thereby enhancing the weldability. The effect is achieved when the Ca content is 0.0005% or more. However, when the Ca content exceeds 0.0050%, Ca binds to S to form CaS, resulting in a reduction in the corrosion resistance. Therefore, when the stainless steel contains Ca, the Ca content is made to fall within the range of 0.0005 to 0.0050%. When Ca is contained, the Ca content is more preferably 0.0010% or more. On the other hand, when Ca is contained, the Ca content is more preferably 0.0040% or less.

B: 0.0005 to 0.0050%

B is an element which improves embrittlement upon secondary forming. The effect is exhibited when the B content is 0.0005% or more. However, when the B content exceeds 0.0050%, the ductility is reduced due to solid-solution strengthening. Therefore, when the stainless steel contains B, the B content is made to fall within the range of 0.0005 to 0.0050%.

REM (rare earth metal): 0.001 to 0.100%

REMs (rare earth metals: elements of atomic numbers 57 to 71 such as La, Ce, and Nd) are elements which are effective for deoxidation. The effect is achieved when the REM content is 0.001% or more. However, when the REM content exceeds 0.100%, the hot formability will deteriorate. Therefore, when the stainless steel contains a REM(s), the REM content is made to fall within the range of 0.001 to 0.100%. When a REM(s) is contained, the REM content is more preferably 0.010% or more. On the other hand, when a REM(s) is contained, the REM content is more preferably 0.050% or less. REM is a general term for Sc, Y, and 15 elements from lanthanum (La) of atomic number 57 to lutetium (Lu) of atomic number 71, and the REM content herein refers to the total content of these elements.

Sn: 0.001 to 0.100%

Sn is an element which is effective for inhibiting surface roughening upon forming. The effect is achieved when the Sn content is 0.001% or more. However, when the Sn content exceeds 0.100%, the hot formability will deteriorate. Therefore, when the stainless steel contains Sn, the Sn content is made to fall within the range of 0.001 to 0.100%. When Sn is contained, the Sn content is more preferably 0.050% or less.

Sb: 0.001 to 0.100%

As with Sn, Sb is an element which is effective for inhibiting surface roughening upon forming. The effect is achieved when the Sb content is 0.001% or more. However, when the Sb content exceeds 0.100%, the formability will deteriorate. Therefore, when the stainless steel contains Sb, the Sb content is made to fall within the range of 0.001 to 0.100%. When Sb is contained, the Sb content is more preferably 0.050% or less.
A preferred method for producing the ferritic stainless steel of the present invention will now be described.
There is no particular limitation on a method for producing the ferritic stainless steel of the present invention. For example, a molten steel, having the above-described chemical composition according to the present invention, is produced through a steelmaking process in a melting furnace such as a converter or an electric furnace, or further through secondary refining such as ladle refining or vacuum refining. Thereafter, the molten steel is formed into a steel slab by a continuous casting process or an ingot casting-blooming process, and the steel slab is hot-rolled into a hot-rolled steel sheet and, if necessary, the hot-rolled steel sheet is subjected to hot-rolled sheet annealing to obtain a hot-rolled and annealed steel sheet. Thereafter, the hot-rolled steel sheet or the hot-rolled and annealed steel sheet is cold-rolled into a cold-rolled steel sheet having a desired thickness and, if necessary, the cold-rolled steel sheet is subjected to cold-rolled sheet annealing to obtain a cold-rolled and annealed steel sheet. There is no particular limitation on conditions for the hot rolling, the cold rolling, the hot-rolled sheet annealing, the cold-rolled sheet annealing, etc.; such processes may be performed under ordinary conditions.

In the steelmaking process of producing a molten steel, the steel that has been melted in a converter or an electric furnace is preferably subjected to secondary refining using, for example, a vacuum oxygen decarburization (VOD) method to produce a steel containing the essential components and optional components described above. While the molten steel produced can be formed into a steel material (steel slab) by any known method, a continuous casting method is preferably used from the viewpoint of productivity and quality. The steel material is then heated preferably to 1050 to 1250°C, and hot-rolled into a hot-rolled steel sheet having a desired thickness. The molten steel may of course be hot-formed into a shape other than a sheet. Preferably, the hot-rolled steel sheet is then subjected to continuous annealing at a temperature of 900 to 1150°C, as necessary, and then descaled by pickling or the like to obtain a hot-rolled product. If necessary, the annealed steel sheet may be descaled, e.g. by shot blasting or by using a grinding brush, before pickling.

The hot-rolled product (e.g. the hot-rolled and annealed sheet) may be formed into a cold-rolled product through a process including cold rolling. The cold rolling may be performed once, but from the viewpoint of productivity and required quality, the cold rolling may be performed twice or more with process annealing interposed between the respective cold rolling operations. The total rolling reduction in one or two or more cold rolling operations is preferably 60% or more, more preferably 70% or more. Preferably, the cold-rolled steel sheet is then subjected to continuous annealing (finish annealing) preferably at a temperature of 900 to 1150°C, more preferably at a temperature of 950 to 1150°C, followed by pickling to obtain a cold-rolled product. The continuous annealing may be performed by bright annealing and the pickling may be omitted. Further, depending on the intended use, skin pass rolling or the like may be performed after the finish annealing to adjust the shape, surface roughness, and material of the steel sheet.

The ferritic stainless steel of the present invention described above is suitable for use in an exhaust heat recovery device or an exhaust gas recirculation device in which at least one joint is assembled by brazing. In particular, the ferritic stainless steel of the present invention is suitably used for parts of a heat exchanger in the exhaust heat recovery device or the exhaust gas recirculation device.

EXAMPLES

Molten steels, having the chemical compositions shown in Table 1, were each produced in a vacuum melting furnace. After heating the steel at 1150°C for 1 hour, the steel was hot-rolled to produce a hot-rolled steel sheet having a thickness of 4.0 mm. After performing hot-rolled sheet annealing by holding the steel sheet at 1080°C for 1 minute, the surface of the steel sheet was ground to remove scale, and the steel sheet was cold-rolled to a thickness of 1.0 mm. The cold-rolled steel sheet was subjected to finish annealing by holding it at 1040°C for 1 minute in an ammonia decomposition gas atmosphere. The surface of the resulting cold-rolled and annealed steel sheet was polished with emery paper #600 and degreased in acetone. The resulting steel sheet was subjected to tests.

The cold-rolled and annealed steel sheet was brazed with a Ni-containing brazing material in the following manner, and (1) evaluation of brazeability was performed. Further, (2) measurement of the amount of σ phase precipitated and (3) evaluation of corrosion resistance were performed on the cold-rolled and annealed steel sheet after the brazing treatment. The results are shown in Table 2.

(1) Evaluation of Brazeability

A test specimen having a width of 50 mm and a length of 50 mm was cut from each cold-rolled and annealed steel sheet, and the test specimen was subjected to the following brazing treatment. A Ni-containing brazing material (JIS standard: BNi-5) was applied, with a diameter of 10 mm and a thickness of 1 mm, to the surface of the test specimen which was held horizontally. Thereafter, the test specimen applied with the Ni-containing brazing material, which was held horizontally with the applied surface facing upward, was heated for 10 minutes in a nitrogen carrier gas atmosphere at 1170°C and 1 Torr, and then cooled to room temperature. After the brazing treatment, the equivalent circle diameter of the brazing material on the surface of the test specimen (the equivalent circle diameter of the brazing material after heating) was measured. The ratio (brazing material spreading ratio) of the equivalent circle diameter of the brazing material after heating to the diameter of the brazing material before heating (10 mm, equal to the equivalent circle diameter) was determined, and evaluated according to the following criteria.

$$
\begin{aligned}
&\text{Spreading ratio of brazing material after heating} \\
&\text{relative to brazing material before heating = (equivalent} \\
&\text{circle diameter of brazing material after heating/diameter} \\
&\text{of brazing material before heating (10 mm))} \times 100 \; (\%)
\end{aligned}
$$

◎ (pass, particularly good): 160% or more
o (pass): not less than 150% and less than 160%
✕ (fail): less than 150%

(2) Measurement of Amount of σ Phase Precipitated

Using a test specimen of each cold-rolled and annealed steel sheet after the brazing treatment, a sample for L-section observation was taken from a portion of the test specimen to which the brazing material was not attached. The sample was subjected to electrolytic polishing and etching in aqua regia. Thereafter, the sample was observed at a magnification of 500 times under an optical microscope, and the amount (area %) of σ phase precipitated was measured in the microscopic field by the point counting method in accordance with ASTM E562. The observation position was the center of the sample in the thickness direction,

○: 1.0% or less
✕: more than 1.0%

(3) Evaluation of Corrosion Resistance

Using a test specimen of each cold-rolled and annealed steel sheet after the brazing treatment, a 20-mm square test piece was taken from a portion of the test specimen to which the brazing material was not attached. The test piece was coated with a sealing material of silicone resin, leaving a 11-mm square measuring area. The test piece was then immersed in a 3.5% aqueous NaCl solution at 30°C, and measurement of pitting corrosion potential was performed in accordance with JIS G 0577 except for the concentration of the aqueous NaCl solution. In particular, after holding the test piece at the spontaneous potential for 10 minutes, the test piece was subjected to a potentiodynamic measurement at a potential sweep rate of 20 mV/min to determine a pitting corrosion potential Vc'100, a potential as measured when the current density reached 100 $\mu$A/cm$^2$. The measured value is shown in Table 2. Considering the conditions of use of a heat exchanger portion of an exhaust heat recovery device or an EGR cooler, the test piece can be determined to be excellent in the corrosion resistance when the pitting corrosion potential Vc'100 is 300 mV (vs SCE) or more, which value is comparable to that of SUS304L which has a track record of use for a heat exchanger portion of an exhaust heat recovery device or an EGR cooler.

○ (pass): 300 mV (vs SCE) or more
✕ (fail): less than 300 mV (vs SCE)

[Table 1]

| No. | Steel symbol | Chemical composition (mass %) | | | | | | | | | | | | | Ni-2 (Si+Mn) | Cr+1.5Mo+Si+1.5Nb-2.5Ni | Remarks |
|---|---|---|---|---|---|---|---|---|---|---|---|---|---|---|---|---|---|
| | | C | Si | Mn | P | S | Cr | Al | Nb | N | Ni | Mo | Others | | | | |
| 1 | A1 | 0.005 | 0.64 | 0.13 | 0.029 | 0.010 | 26.1 | 0.015 | 0.32 | 0.013 | 2.62 | 1.88 | | 1.08 | 23.49 | Conforming steel |
| 2 | A2 | 0.005 | 0.62 | 0.13 | 0.030 | 0.009 | 28.2 | 0.014 | 0.30 | 0.012 | 2.81 | 1.71 | | 1.31 | 24.81 | Conforming steel |
| 3 | A3 | 0.006 | 0.63 | 0.13 | 0.028 | 0.009 | 26.2 | 0.011 | 0.31 | 0.013 | 2.54 | 2.67 | | 1.02 | 24.95 | Conforming steel |
| 4 | A4 | 0.005 | 0.95 | 0.12 | 0.033 | 0.010 | 26.0 | 0.014 | 0.33 | 0.011 | 2.69 | 1.83 | | 0.55 | 23.47 | Conforming steel |
| 5 | A5 | 0.005 | 0.68 | 0.28 | 0.031 | 0.009 | 25.8 | 0.013 | 0.32 | 0.014 | 2.08 | 1.86 | | 0.16 | 24.55 | Conforming steel |
| 6 | A6 | 0.005 | 0.68 | 0.13 | 0.032 | 0.010 | 25.7 | 0.014 | 0.32 | 0.013 | 2.92 | 1.94 | | 1.30 | 22.47 | Conforming steel |
| 7 | A7 | 0.004 | 0.71 | 0.13 | 0.028 | 0.009 | 25.8 | 0.017 | 0.56 | 0.012 | 2.74 | 1.93 | | 1.06 | 23.40 | Conforming steel |
| 8 | A8 | 0.006 | 0.67 | 0.13 | 0.033 | 0.009 | 25.9 | 0.016 | 0.32 | 0.013 | 2.77 | 1.25 | | 1.17 | 2200 | Conforming steel |
| 9 | A9 | 0.005 | 0.63 | 0.12 | 0.028 | 0.010 | 25.9 | 0.014 | 0.33 | 0.011 | 2.33 | 1.82 | | 0.83 | 23.93 | Conforming steel |
| 10 | A10 | 0.005 | 0.68 | 0.07 | 0.029 | 0.009 | 25.8 | 0.013 | 0.32 | 0.014 | 2.62 | 1.90 | | 1.12 | 23.26 | Conforming steel |
| 11 | A11 | 0.004 | 0.65 | 0.12 | 0.027 | 0.009 | 25.7 | 0.017 | 0.34 | 0.012 | 1.84 | 1.73 | | 0.30 | 24.86 | Conforming steel |
| 12 | A12 | 0.005 | 0.72 | 0.12 | 0.031 | 0.011 | 25.7 | 0.015 | 0.23 | 0.014 | 2.47 | 1.81 | | 0.79 | 23.31 | Conforming steel |
| 13 | A13 | 0.025 | 0.70 | 0.13 | 0.033 | 0.012 | 25.6 | 0.015 | 0.32 | 0.013 | 2.58 | 1.92 | | 0.92 | 23.21 | Conforming steel |
| 14 | A14 | 0.006 | 0.69 | 0.14 | 0.029 | 0.009 | 26.3 | 0.013 | 0.29 | 0.028 | 2.43 | 1.91 | | 0.77 | 24.22 | Conforming steel |

(continued)

| No. | Steel symbol | Chemical composition (mass %) | | | | | | | | | | | | Ni-2 (Si+Mn) | Cr+1.5Mo+Si+1.5Nb-2.5Ni | Remarks |
|---|---|---|---|---|---|---|---|---|---|---|---|---|---|---|---|---|
| | | C | Si | Mn | P | S | Cr | Al | Nb | N | Ni | Mo | Others | | | |
| 15 | A15 | 0.005 | 0.68 | 0.13 | 0.029 | 0.010 | 26.2 | 0.015 | 0.31 | 0.013 | 2.58 | 1.88 | Ti:0.05, Zr:0.04 | 0.96 | 23.72 | Conforming steel |
| 16 | A16 | 0.005 | 0.68 | 0.13 | 0.032 | 0.010 | 25.5 | 0.011 | 0.30 | 0.015 | 2.57 | 2.01 | W:0.41 | 0.95 | 23.22 | Conforming steel |
| 17 | A17 | 0.004 | 0.70 | 0.13 | 0.030 | 0.013 | 26.3 | 0.012 | 0.34 | 0.016 | 2.38 | 1.85 | Cu:0.52, Co:0.59 | 0.72 | 24.34 | Conforming steel |
| 18 | A18 | 0.005 | 0.69 | 0.13 | 0.033 | 0.011 | 25.6 | 0.015 | 0.33 | 0.010 | 2.37 | 1.88 | Sn 0.047, Sb:0.048 | 0.73 | 23.68 | Conforming steel |
| 19 | A19 | 0.005 | 0.69 | 0.12 | 0.029 | 0.007 | 25.8 | 0.015 | 0.33 | 0.009 | 2.74 | 1.89 | Mg: 0.0028, B: 0.0031, Ca: 0.0039 | 1.12 | 22.97 | Conforming steel |
| 20 | A20 | 0.005 | 0.68 | 0.13 | 0.033 | 0.015 | 26.1 | 0.010 | 0.31 | 0.016 | 2.63 | 1.72 | V:0.14 | 1.01 | 23.25 | Conforming steel |
| 21 | A21 | 0.007 | 0.71 | 0.13 | 0.034 | 0.009 | 25.9 | 0.015 | 0.35 | 0.013 | 2.39 | 1.92 | REM: 0.015 | 0.71 | 2404 | Conforming steel |
| 22 | A22 | 0.006 | 0.63 | 0.12 | 0.031 | 0.009 | 26.2 | 0.014 | 0.33 | 0.012 | 2.74 | 1.83 | Cu:0.51, B:0.0029 | 1.24 | 23.22 | Conforming steel |
| 23 | A23 | 0.012 | 0.63 | 0.12 | 0.031 | 0.009 | 26.2 | 0.013 | 0.30 | 0.012 | 2.48 | 1.81 | | 0.98 | 23.80 | Conforming steel |
| 24 | A24 | 0.006 | 0.64 | 0.13 | 0.030 | 0.001 | 24.2 | 0.016 | 0.31 | 0.011 | 2.63 | 1.84 | | 1.09 | 21.49 | Conforming steel |
| 25 | A25 | 0.006 | 0.59 | 0.13 | 0.030 | 0.001 | 29.1 | 0.012 | 0.29 | 0.011 | 2.91 | 1.35 | | 1.47 | 24.88 | Conforming steel |
| 26 | A26 | 0.006 | 0.51 | 0.13 | 0.030 | 0.011 | 26.1 | 0.014 | 0.32 | 0.012 | 2.48 | 1.87 | | 1.20 | 23.70 | Conforming steel |

12

(continued)

| No. | Steel symbol | Chemical composition (mass %) | | | | | | | | | | | | | | Remarks |
|---|---|---|---|---|---|---|---|---|---|---|---|---|---|---|---|---|
| | | C | Si | Mn | P | S | Cr | Al | Nb | N | Ni | Mo | Others | Ni-2 (Si+Mn) | Cr+1.5Mo+Si+1.5Nb-2.5Ni | |
| 27 | A27 | 0.005 | 0.66 | 0.13 | 0.030 | 0.010 | 26.1 | 0.005 | 0.32 | 0.012 | 2.62 | 1.74 | | 1.04 | 23.30 | Conforming steel |
| 28 | B1 | 0.005 | 0.59 | 0.13 | 0.029 | 0.010 | 30.5 | 0.015 | 0.30 | 0.013 | 2.91 | 1.23 | | 1.47 | 26.11 | Comparative steel |
| 29 | B2 | 0.004 | 0.66 | 0.15 | 0.031 | 0.010 | 24.5 | 0.015 | 0.31 | 0.014 | 2.63 | 3.40 | | 1.01 | 24.15 | Comparative steel |
| 30 | B3 | 0.005 | 0.68 | 0.13 | 0.030 | 0.010 | 26.1 | 0.032 | 0.32 | 0.013 | 2.62 | 1.91 | | 1.00 | 23.58 | Comparative steel |
| 31 | B4 | 0.005 | 1.20 | 0.11 | 0.028 | 0.010 | 25.7 | 0.014 | 0.32 | 0.016 | 2.77 | 1.82 | | 0.15 | 23.19 | Comparative steel |
| 32 | B5 | 0.004 | 0.65 | 0.42 | 0.029 | 0.010 | 25.8 | 0.015 | 0.32 | 0.014 | 2.31 | 1.88 | | 0.17 | 23.98 | Comparative steel |
| 33 | B6 | 0.005 | 0.69 | 0.13 | 0.032 | 0.010 | 25.9 | 0.016 | 1.10 | 0.015 | 250 | 1.78 | | 0.86 | 24.66 | Comparative steel |
| 34 | B7 | 0.004 | 0.72 | 0.11 | 0.029 | 0.010 | 23.5 | 0.015 | 0.32 | 0.012 | 2.62 | 1.92 | | 0.96 | 21.03 | Comparative steel |
| 35 | B8 | 0.005 | 0.70 | 0.12 | 0.029 | 0.010 | 25.5 | 0.016 | 0.32 | 0.013 | 2.38 | 0.81 | | 0.74 | 21.95 | Comparative steel |
| 36 | B9 | 0.004 | 0.52 | 0.10 | 0.029 | 0.010 | 24.2 | 0.015 | 0.32 | 0.015 | 1.39 | 2.02 | | 0.15 | 24.76 | Comparative steel |
| 37 | B10 | 0.004 | 0.81 | 0.13 | 0.034 | 0.009 | 27.5 | 0.012 | 0.35 | 0.018 | 2.38 | 2.22 | | 0.50 | 26.22 | Comparative steel |
| 38 | B11 | 0.005 | 0.90 | 0.28 | 0.034 | 0.009 | 25.8 | 0.015 | 0.35 | 0.013 | 2.22 | 1.78 | | -0.14 | 24.35 | Comparative steel |

· The balance of each of the above chemical compositions is Fe and incidental impurities
· Underlined value is outside the inventive range

[Table 2]

| No. | Steel symbol | Evaluation results | | | Remarks |
|---|---|---|---|---|---|
| | | Brazeability | Amount of σ phase precipitated | Corrosion resistance | |
| 1 | A1 | ○ | ○ | ○ | Inventive Example |
| 2 | A2 | ○ | ○ | ○ | Inventive Example |
| 3 | A3 | ○ | ○ | ○ | Inventive Example |
| 4 | A4 | ○ | ○ | ○ | Inventive Example |
| 5 | A5 | ○ | ○ | ○ | Inventive Example |
| 6 | A6 | ◎ | ○ | ○ | Inventive Example |
| 7 | A7 | ○ | ○ | ○ | Inventive Example |
| 8 | A8 | ○ | ○ | ○ | Inventive Example |
| 9 | A9 | ◎ | ○ | ○ | Inventive Example |
| 10 | A10 | ◎ | ○ | ○ | Inventive Example |
| 11 | A11 | ○ | ○ | ○ | Inventive Example |
| 12 | A12 | ◎ | ○ | ○ | Inventive Example |
| 13 | A13 | ◎ | ○ | ○ | Inventive Example |
| 14 | A14 | ○ | ○ | ○ | Inventive Example |
| 15 | A15 | ○ | ○ | ○ | Inventive Example |
| 16 | A16 | ◎ | ○ | ○ | Inventive Example |
| 17 | A17 | ○ | ○ | ○ | Inventive Example |
| 18 | A18 | ◎ | ○ | ○ | Inventive Example |
| 19 | A19 | ◎ | ○ | ○ | Inventive Example |
| 20 | A20 | ○ | ○ | ○ | Inventive Example |
| 21 | A21 | ◎ | ○ | ○ | Inventive Example |
| 22 | A22 | ○ | ○ | ○ | Inventive Example |
| 23 | A23 | ○ | ○ | ○ | Inventive Example |
| 24 | A24 | ○ | ○ | ○ | Inventive Example |
| 25 | A25 | ○ | ○ | ○ | Inventive Example |
| 26 | A26 | ○ | ○ | ○ | Inventive Example |
| 27 | A27 | ○ | ○ | ○ | Inventive Example |
| 28 | B1 | ○ | × | × | Comp. Example |
| 29 | B2 | ◎ | × | × | Comp. Example |
| 30 | B3 | × | ○ | ○ | Comp. Example |
| 31 | B4 | × | × | × | Comp. Example |
| 32 | B5 | × | ○ | × | Comp. Example |
| 33 | B6 | ○ | × | × | Comp. Example |
| 34 | B7 | ◎ | ○ | × | Comp. Example |
| 35 | B8 | ○ | ○ | × | Comp. Example |
| 36 | B9 | × | × | × | Comp. Example |

(continued)

| No. | Steel symbol | Evaluation results | | | Remarks |
|---|---|---|---|---|---|
| | | Brazeability | Amount of σ phase precipitated | Corrosion resistance | |
| 37 | B10 | ○ | × | × | Comp. Example |
| 38 | B11 | × | ○ | ○ | Comp. Example |

As can be seen in Table 2, the stainless steels of Inventive Examples Nos. 1 to 27 all achieved good brazeability and excellent corrosion resistance. In particular, the stainless steels of Nos. 6, 9, 10, 12, 13, 16, 18, 19, and 21, having a Cr content of less than 26.0% and an Al content of 0.015% or less, and satisfying the inequality Ni - 2(Si + Mn) ≥ 0.50%, exhibited particularly good brazeability.

In contrast, the stainless steels of Comparative Examples Nos. 28 to 38, whose chemical compositions are outside the appropriate ranges, could not simultaneously achieve good brazeability and excellent corrosion resistance.

More specifically, in Comparative Example No. 28 (steel symbol B1), the Cr content exceeds the upper limit according to the present invention, and therefore the σ phase was precipitated in excess of 1.0% in the microstructure after brazing, and excellent corrosion resistance was not achieved.

In Comparative Example No. 29 (steel symbol B2), the Mo content exceeds the upper limit according to the present invention, and therefore the σ phase was precipitated in excess of 1.0% in the microstructure after brazing, and excellent corrosion resistance was not achieved.

In Comparative Example No. 30 (steel symbol B3), the Al content exceeds the upper limit according to the present invention, and therefore good brazeability was not achieved.

In Comparative Example No. 31 (steel symbol B4), the Si content exceeds the upper limit according to the present invention, and therefore good brazeability was not achieved. Further, the σ phase was precipitated in excess of 1.0% in the microstructure after brazing, and excellent corrosion resistance was not achieved.

In Comparative Example No. 32 (steel symbol B5), the Mn content exceeds the upper limit according to the present invention, and therefore good brazeability was not achieved. Further, excellent corrosion resistance was not achieved.

In Comparative Example No. 33 (steel symbol B6), the Nb content exceeds the upper limit according to the present invention, and therefore the σ phase was precipitated in excess of 1.0% in the microstructure after brazing, and excellent corrosion resistance was not achieved.

In Comparative Example No. 34 (steel symbol B7), the Cr content is less than the lower limit according to the present invention, and therefore excellent corrosion resistance was not achieved.

In Comparative Example No. 35 (steel symbol B8), the Mo content is less than the lower limit according to the present invention, and therefore excellent corrosion resistance was not achieved.

In Comparative Example No. 36 (steel symbol B9), the Ni content is less than the lower limit according to the present invention, and therefore good brazeability was not achieved. Further, the σ phase was precipitated in excess of 1.0% in the microstructure after brazing, and excellent corrosion resistance was not achieved.

In Comparative Example No. 37 (steel symbol B10), while the contents of all the components are within the ranges defined herein, the inequality (2) is not satisfied. The σ phase was precipitated in excess of 1.0% and excellent corrosion resistance was not achieved.

In Comparative Example No. 38 (steel symbol B11), while the contents of all the components are within the ranges defined herein, the inequality (1) is not satisfied. Good brazeability was not achieved.

Industrial Applicability

According to the present invention, a ferritic stainless steel suitable for use in an exhaust gas recirculation device, e.g. for parts of a heat exchanger of an exhaust heat recovery device or an EGR cooler which are assembled by brazing, can be obtained, which is very useful industrially.

Claims

1. A ferritic stainless steel having a composition comprising, in % by mass:

C: 0.003 to 0.030%;
Si: 0.01 to 1.00%;

Mn: 0.05 to 0.30%;
P: 0.050% or less;
S: 0.020% or less;
Cr: 24.0 to 30.0%;
Ni: 1.50 to 3.00%;
Mo: 1.00 to 3.00%;
Al: 0.001 to 0.020%;
Nb: 0.20 to 0.80%; and
N: 0.030% or less,

the balance being Fe and incidental impurities, the composition satisfying the following inequalities (1) and (2):

$$\mathrm{Ni} - 2(\mathrm{Si} + \mathrm{Mn}) \geq 0.00\% \qquad (1)$$

$$\mathrm{Cr} + 1.5\mathrm{Mo} + \mathrm{Si} + 1.5\mathrm{Nb} - 2.5\mathrm{Ni} \leq 25.0\% \qquad (2)$$

(where Ni, Si, Mn, Cr, Mo, and Nb each represent a content (% by mass) of the element).

2. The ferritic stainless steel according to claim 1, further comprising, in % by mass, one or two or more selected from:

Cu: 0.01 to 1.00%;
Co: 0.01 to 1.00%; and
W: 0.01 to 2.00%.

3. The ferritic stainless steel according to claim 1 or 2, further comprising, in % by mass, one or two or more selected from:

Ti: 0.01 to 0.10%;
V: 0.01 to 0.20%;
Zr: 0.01 to 0.10%;
Mg: 0.0005 to 0.0050%;
Ca: 0.0005 to 0.0050%;
B: 0.0005 to 0.0050%;
REM (rare earth metal): 0.001 to 0.100%;
Sn: 0.001 to 0.100%; and
Sb: 0.001 to 0.100%.

4. The ferritic stainless steel according to claim 1 or 2, which is for an exhaust heat recovery device or an exhaust gas recirculation device in which at least one joint is assembled by brazing.

5. The ferritic stainless steel according to claim 3, which is for an exhaust heat recovery device or an exhaust gas recirculation device in which at least one joint is assembled by brazing.

EP 4 296 387 A1

# INTERNATIONAL SEARCH REPORT

International application No.

**PCT/JP2022/017825**

## A. CLASSIFICATION OF SUBJECT MATTER

***C21D 9/46***(2006.01)i; ***C22C 38/00***(2006.01)i; ***C22C 38/48***(2006.01)i; ***C22C 38/60***(2006.01)i
FI:   C22C38/00 302Z; C21D9/46 R; C21D9/46 Z; C22C38/48; C22C38/60

According to International Patent Classification (IPC) or to both national classification and IPC

## B. FIELDS SEARCHED

Minimum documentation searched (classification system followed by classification symbols)
C22C38/00-38/60; C21D9/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | WO 2018/216236 A1 (JFE STEEL CORP) 29 November 2018 (2018-11-29) | 1-5 |
| A | WO 2018/043310 A1 (JFE STEEL CORP) 08 March 2018 (2018-03-08) | 1-5 |
| A | CN 112647026 A (NORTH UNIVERSITY OF CHINA) 13 April 2021 (2021-04-13) | 1-5 |
| A | CN 103276307 A (BAOSTEEL STAINLESS STEEL CO., LTD.) 04 September 2013 (2013-09-04) | 1-5 |

☐ Further documents are listed in the continuation of Box C.      ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **13 June 2022** | **28 June 2022** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

## INTERNATIONAL SEARCH REPORT
### Information on patent family members

International application No.

**PCT/JP2022/017825**

| Patent document cited in search report | | | Publication date (day/month/year) | Patent family member(s) | | | Publication date (day/month/year) |
|---|---|---|---|---|---|---|---|
| WO | 2018/216236 | A1 | 29 November 2018 | US | 2020/0080181 | A1 | |
| | | | | EP | 3604589 | A1 | |
| | | | | CN | 110678566 | A | |
| | | | | KR | 10-2020-0002991 | A | |
| WO | 2018/043310 | A1 | 08 March 2018 | US | 2019/0177824 | A1 | |
| | | | | EP | 3508598 | A1 | |
| | | | | CN | 109563596 | A | |
| | | | | KR | 10-2019-0028785 | A | |
| | | | | MX | 2019001947 | A | |
| CN | 112647026 | A | 13 April 2021 | (Family: none) | | | |
| CN | 103276307 | A | 04 September 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6157664 B
- JP 6159775 B
- JP 6270821 B
- JP 2010121208 A
- JP 2009174040 A
- JP 2010285683 A